# EUROPEAN PATENT SPECIFICATION

(11) **EP 0 870 918 B1**
(45) Date of publication and mention of the grant of the patent: **20.08.2003**
(21) Application number: 98106755.6
(22) Date of filing: 14.04.1998
(51) Int. Cl.: F02F 1/40, F01P 3/16

(54) **Cooling structure for a fuel injection valve of an internal combustion engine and an internal combustion engine**
Kühlungsstruktur für Brennstoffeinspritzventil einer Brennkraftmaschine und eine Brennkraftmaschine
Structure de refroidissement d'une valve d'injection de carburant d'un moteur à combustion interne et un moteur à combustion interne

(30) Priority: 12.04.1997 JP 11037397
(43) Date of publication of application: 14.10.1998
(73) Proprietor: YAMAHA HATSUDOKI KABUSHIKI KAISHA, Iwata-shi Shizuoka-ken, 438 (JP)
(72) Inventor: Suzuki, Yuichi, Iwata-Shi, Shizuoka-ken (JP); Ochiai, Katsumi, Iwata-Shi, Shizuoka-ken (JP)
(74) Representative: Grünecker, Kinkeldey, Stockmair & Schwanhäusser Anwaltssozietät

(56) References cited:
- DE-A- 3 123 538
- DE-A- 3 327 810
- DE-C- 19 542 494

## Description

The present invention relates to a cooling structure for a fuel injection valve of an internal combustion engine according to the preamble part of the independent claim 1.

The cylinders of such engines are equipped with a cylinder main body having a cylinder hole and with a cylinder head which is attached to the top end of said cylinder main body so as to close off the top end of this cylinder hole when viewed vertically along the central axis of said cylinder hole. An intake passage is formed in said cylinder head to connect the exterior of the front of said cylinder head with the upper part of the inside of said cylinder hole when a certain horizontal direction viewed from the side of said cylinder is taken to be the front direction, and a fuel injection valve that allows fuel to be injected into the upper part inside said cylinder hole is provided, this fuel injection valve being attached to said cylinder head at the underside of said intake passage.

While the engine is running, air from outside is drawn into said cylinder hole through said intake passage. Also, fuel is injected from said fuel injection valve into the interior of said cylinder hole; this fuel is mixed with said air to produce a mixture, whereby this fuel is efficiently combusted inside said cylinder hole and converted to power which is output via a crankshaft.

The fuel injection valve is heated by the heat resulting from said combustion. It is also cooled to some extent by air passing through the intake passage or passages of the cylinder head.

Since said fuel injection valve is located at the underside of said intake passage or passages, the cooling effects of air passing through this intake passage are biased toward the part of the fuel injection valve on the side nearer said fuel intake passage. Furthermore, the fuel injection valve is partially biased to a high temperature from the combustion chamber and may overheat. Both effects result in operational difficulties such as changes in the magnetism of the solenoid in the fuel injection valve and impose thermal stress on the injection valve.

DE 195 42 494 C1 discloses a liquid cooled cylinder head comprising cooling water chambers divided in cooling water chamber sections which are provided to each combustion chamber. The cooling water chambers are interspersed with five passages and chambers housing spark plugs, injection nozzles, or the like, wherein ribs are provided in each central section of the cooling water chambers between the valve passages and the chambers housing spark plugs or the like for guiding the cooling water to the cylinder head bottom.

DE 33 27 810 A1 discloses a special arrangement of the intake and outlet valve stems to each other and the special shape of the top end of the cylinder hole housing the intake and outlet valve stems. Here a non-stop cooling passage is provided in the section between the intake and outlet valve stems, wherein the cooling passage is connected by a connecting hole of the cooling chamber recess formed at the bottom of the cylinder head.

DE 31 23 538 A discloses a water coolant plural-cylinder combustion engine with a cylinder head produced without a water jacket core, wherein an open cast throughgoing coolant chamber is provided merely at the left side of the cylinder head. Here the cylinder head comprises a plurality of drilled holes for leading coolant through the cylinder head in order to cool the valve bars and, accordingly, mounting holes for the injection means or spark plugs, wherein the drilling holes for cooling the injection means extend in a straight line parallel to a central axis of the injection means.

It is an objective of the present invention to improve a cooling structure as indicated above so as to provide a more even distribution of temperature at the injection valve.

According to the present invention, the objective is solved by a cooling structure for a fuel injection valve of an internal combustion engine, said engine comprises a cylinder main body having a cylinder hole, a cylinder head, attached to the cylinder main body, to close off a top end of said cylinder hole, and a fuel injection valve for injecting fuel into said cylinder hole, wherein said cooling structure comprises a cooling jacket formed in the cylinder head in the vicinity of said fuel injection valve by casting and arranged such as to cool said injection valve, wherein said cast cooling jacket comprises a portion extending in a straight line substantially or even exactly parallel to a central axis of an injection part of said fuel injection valve, wherein said portion has a circular cross-section.

Thus, the water jacket in the cylinder head can be manufactured easily, for example by drilling. Accordingly, not only uniform cooling of the fuel injection valve can be achieved but also this can be obtained by a construction which can be manufactured efficiently.

By forming a cooling jacket in the cylinder head in the vicinity of the fuel injection valve, the fuel injection valve is cooled uniformly and to a sufficient extent so that thermal stress on the injection valve and the above-mentioned operational difficulties can be avoided.

The cooling jacket can be a cooling water jacket. However, any other coolant medium, for example oil, can be used as well.

Preferably, an intake passage leading to the cylinder hole is formed in the cylinder head on one side of the fuel injection valve and the cooling jacket is provided substantially on the opposite side of said injection valve, i.e. on the hot side of the fuel injection valve. In particular, in multi-valve engines having two or more intake openings for each cylinder, the cooling jacket extends underneath the injection valve and may extend beyond the injection valve in width direction when the cylinder is viewed from the top, i.e. along its axis.

In order to provide a even more homogeneous distribution of temperature in the injection valve, another cooling jacket is formed in the cylinder head between the injection valve and the intake passage or branches of the intake passage.

According to another preferred embodiment, the cooling jacket in the cylinder head is connected to a cooling jacket in the cylinder main body for cooling the cylinder so that one single pump can be used in order to supply coolant medium to the several cooling jackets.

According to another preferred embodiment of the invention, the cylinder head and cylinder main body are connected by head bolts which are arranged in such manner that the fuel injection valve crosses a plane defined by the axes of two head bolts above a sealing portion of the cylinder head, said sealing portion being arranged between said two axes. Thus, it is possible to ensure proper sealing between a cylinder head and the cylinder main body, in particular if fuel passes through said seal from the cooling jacket in the cylinder main body to the cooling jackets provided in the cylinder head.

Moreover, the cooling jacket beneath the fuel injection valve will thus be subjected to air streaming around the corresponding portion of the cylinder head which contributes to the cooling effect of the coolant medium.

Preferably, another cooling jacket is formed in the cylinder head between the injection valve and the intake passage.

Furthermore, the above-mentioned objective is solved by an internal combustion engine according to claim 9.

Further preferred embodiments of the present invention are laid down in the further subclaims.

In the following, the present invention is explained in greater detail by means of several embodiments thereof in conjunction with the accompanying drawings,
wherein:
- Fig. 1: is a side elevational view of in-cross section a preferred embodiment of an internal combustion engine having a cooling structure,
- Fig. 2: shows a top plane view in cross-section of the embodiment of Fig. 1 in the direction of the arrows 2-2,
- Fig. 3: shows an enlarged partial view of the cylinder head and cooling structure according to the embodiment of Fig. 1,

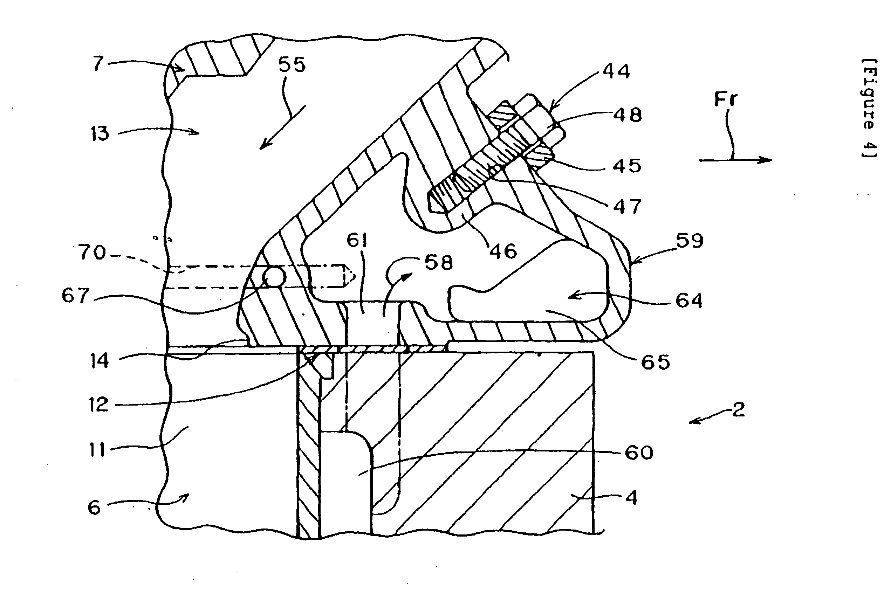

- Fig. 4: shows another view of the cooling structure in the direction of the arrows 4-4 in Fig. 2.

In the Figures, item 1 is a four-stroke internal combustion engine, and for the sake of simplicity the direction of arrow Fr in the figures (will also be referred to as "a certain horizontal direction" ) is taken as the forward direction, while the left and right directions referred to in the following are the horizontal directions as seen along said forward direction. Note that in the illustrated examples, said engine is shown as having a single cylinder, although it may also have multiple cylinders.

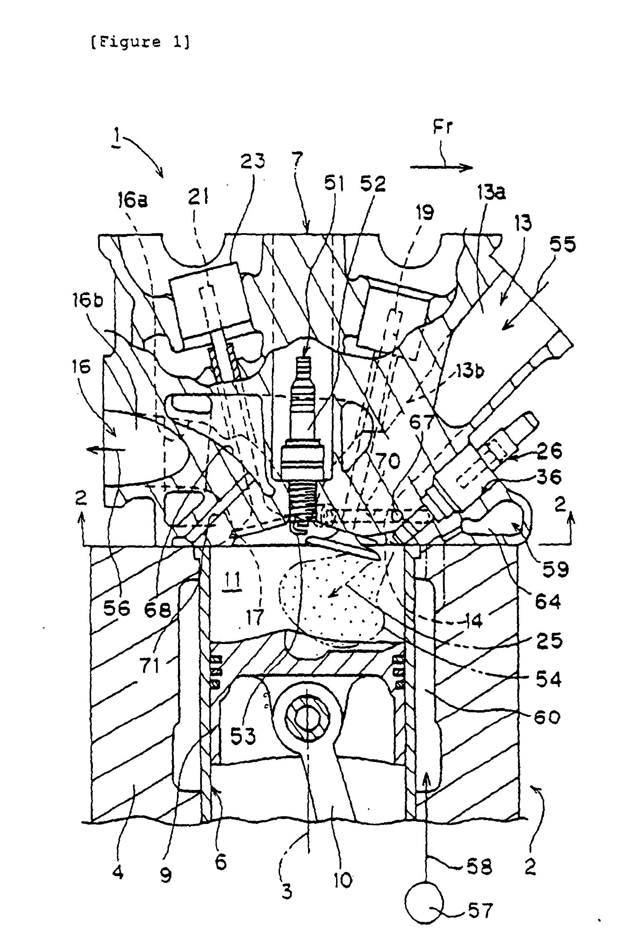

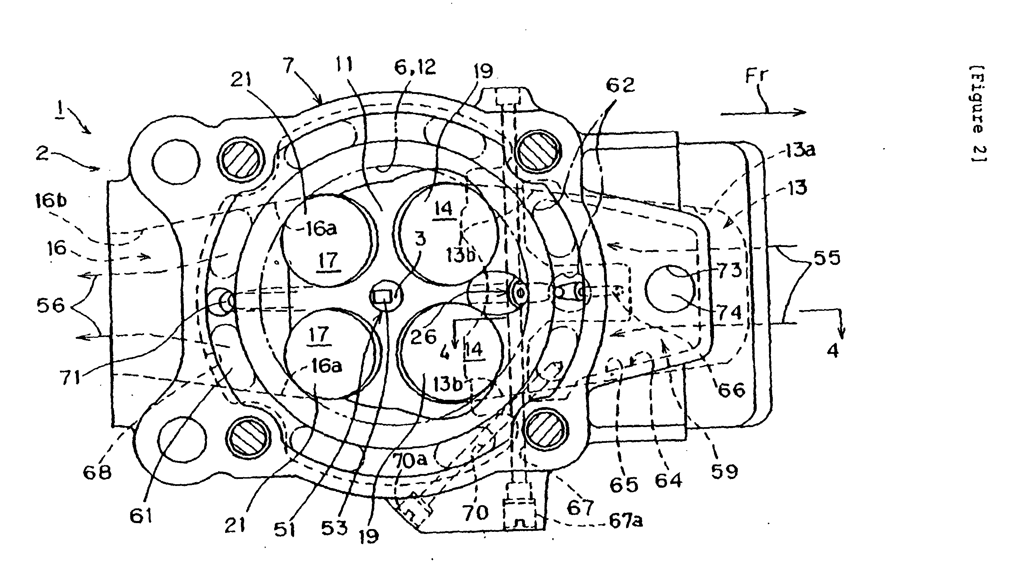

In Figures 1 and 2, said engine 1 is equipped with a crankcase which accommodates and supports a crankshaft whose central axis extends from left to right, and a cylinder 2 which projects up from this crankcase. This cylinder 2 is equipped with a cylinder main body 4 having a vertical central axis 3, a cylinder hole 6 formed in said cylinder main body 4 on the same central axis 3, and a cylinder head 7 which is attached to the top end of said cylinder main body 4-which is the end projecting from the upper part - so as to close off the top end of cylinder hole 6.

A piston 9 is fitted into said cylinder hole 6 with the ability to slide up and down along the axial direction thereof, and said piston 9 is coupled to the abovementioned crankshaft with a connecting rod 10. The space from the upper part of the interior of said cylinder hole 6 to the lower surface of said cylinder head 7 is combustion chamber 11. Also, a circular plate metal gasket 12 is interspersed on said central axis 3 between the opposing surfaces of the top end surface of said cylinder main body 4 and the bottom end surface of cylinder head 7, and this gasket 12 forms a seal between said opposing surfaces.

In particular, an intake passage 13 is formed in said cylinder head 7 to connect the exterior of the upper front part of said cylinder head 7 as viewed from the side of said cylinder 2 (Figure 1) with the front part of said combustion chamber 11. The upstream side of said intake passage 13 consists of a single main passage 13a, while the downstream side consists of a plurality of (two) branch passages 13b, 13b which branch off from the downstream end of said main passage 13a. The upstream end of said main passage 13a is connected with the outside - which is at atmospheric pressure - through parts such as a throttle valve and air cleaner (not illustrated). On the other hand, the opening parts from said branch passages 13b to the front part of said combustion chamber 11 respectively constitute intake opening parts 14.

An exhaust passage 16, which connects the rear part of said combustion chamber 11 with the outside to the rear of said cylinder head 7, is formed in said cylinder head 7. The upstream side of said exhaust passage 16 consists of a plurality of (two) branch passages 16a, while the downstream side consists of a main passage 16b which combines the downstream ends of said branch passages 16a, 16a. The opening parts of said branch passages 16a to the rear part of said combustion chamber 11 respectively constitute exhaust opening parts 17. On the other hand, the downstream end of each said main passage 16b is opened to the outside - which is at atmospheric pressure - through parts such as a silencer (not illustrated).

A plurality of (two) intake valves 19 which respectively open and close each said intake opening part 14 are accommodated and supported by said cylinder head 7, and each said intake valve 19 is respectively pressed upon by a spring so as to close off each said intake opening part 14. On the other hand, a plurality of (two) exhaust valves 21 - which respectively open and close each said exhaust opening part 17 - are accommodated and supported in said cylinder head 7, and each said exhaust valve 21 is respectively pressed on by a spring so as to close off each exhaust opening part 17.

A valve-moving mechanism 23, which is operated by said crankshaft and acts so as to open each of said intake valves 19 and exhaust valves 21 by resisting each of said springs, is also provided. This mechanism is made in such a way that each intake valve 19 and each exhaust valve 21 is opened and closed by said valve-moving mechanism 23 operated by said crankshaft, whereby each said intake opening part 14 and exhaust opening part 17 is respectively opened at a specific crank angle.

In Figures 1 through 3, fuel injection valve 26-which is able to inject fuel 25 (gasoline) into said combustion chamber 11 - is attached to cylinder head 7 at the underside of said intake passage 13.

Said fuel injection valve 26 is equipped with a large-diameter valve main body part 28, which has the shape of a rod with its central axis 27 extending in a straight line and which has a solenoid valve and the like inside it on this central axis 27, a pipe-shaped fuel inlet part 29 which projects from this valve main body part 28 in one direction of the axial direction thereof, and a pipe-shaped fuel injection part 30 which projects from said valve main body part 28 in the other direction of the axial direction thereof.

Said fuel inlet part 29 and fuel injection part 30 are located on said central axis 27 along with said valve main body part 28. A fuel inlet hole 32 is formed on this central axis 27 in said fuel inlet part 29, and fuel 25 that has been pressurized by a fuel pump is supplied at a specific pressure to this fuel inlet hole 32. On the other hand, a fuel injection nozzle 33 is formed on this central axis 27 in said fuel injection part 30; this fuel injection nozzle 33 is positioned between both said intake opening parts 14, 14 in the left-to-right direction, and is positioned to the front of said intake opening parts 14 when viewed from the side.

The solenoid valve inside said valve main body part 28 is freely able to open and close the fuel passage connecting said fuel inlet hole 32 with fuel injection nozzle 33, and the action of opening this valve causes the fuel 25 supplied by said fuel inlet hole 32 to be injected into combustion chamber 11 through said fuel injection nozzle 33.

In particular, when said engine 1 is viewed from the side (Figure 1), an attachment hole 36 for attaching said fuel injection valve 26 to said cylinder head 7 is attached to said cylinder head 7 at the underside of said intake passage 13. The central axis 37 of said attachment hole 36 extends in a straight line so as to more or less follow said intake passage 13, and this attachment hole 36 is made to pass through the top of said cylinder head 7 into combustion chamber 11.

Said attachment hole 36 is shaped so that said fuel injection valve 26 can be removably fitted from the outside of cylinder head 7 along the central axis 37 thereof. More specifically, said attachment hole 36 is configured from a large-diameter hole 38 into which said valve main body part 28 is fitted from the outside of said cylinder head 7, and a small-diameter hole 39 into which is fitted said fuel injection part 30 by connecting said large-diameter hole 38 with combustion chamber 11. A circular sealing material 40 made of a heat-resistant resin is interspersed between the outer circumferential surface of said fuel injection part 30 and the inner circumferential surface of small-diameter hole 39 to form a seal between these parts 30 and 39, and this sealing material 40 is attached by fitting it to the outside of said fuel injection part 30. A stepped surface 41, which is a transitional part from valve main body part 28 of said fuel injection valve 26 to fuel injection part 30, and a stepped surface 42, which is a transitional part from large-diameter hole 38 of said attachment hole 36 to small-diameter hole 39, face toward each other along the axial direction of said central axes 27 and 37, and a circular plate metal sealing material 43 is interspersed between both of these stepped surfaces 41 and 42 to form a seal between these parts 41 and 42.

A securing tool 44 is provided to removably secure said fuel injection valve 26 to said cylinder head 7. This securing tool 44 is configured from a flange 45 which is fitted onto said fuel inlet part 29, a female thread 47 which is formed in boss part 46 of said cylinder head 7, and a bolt 48 which is passed through said flange 45 and screwed into said female thread 47.

If said fuel injection valve 26 is removably fitted to said attachment hole 36 and said fuel injection valve 26 is secured to cylinder head 7 with said securing tool 44, fuel injection valve 26 will be attached near the underside of said intake passage 13, whereupon sealing material 43 will be clamped between both said stepped surfaces 41 and 42, forming a seal between the outer surface of said fuel injection valve 26 and the inner surface of attachment hole 36.

A spark plug 51 is provided more or less on the central axis 3 of said cylinder 2. This spark plug 51 is configured from a main body part 52 which is attached to said cylinder head 7, and a sparking part 53 which is attached to one end part of this main body part 52 and faces into said combustion chamber 11.

During the operation of engine 1, when intake opening part 14 is opened, air 55 from the outside is drawn into the combustion chamber 11 inside said cylinder hole 6 through said intake passage 13. Fuel 25 is also injected into said combustion chamber 11 from said fuel injection valve 26 - this fuel 25 is mixed with said air 55 to produce a mixture 54, whereby fuel 25 is efficiently combusted inside said combustion chamber 11, converted into power, and this power is then output via the crankshaft.

On the other hand, the combustion gases produced by said combustion are discharged to the outside as exhaust 56 through said exhaust passage 16 when each said exhaust opening part 17 is opened.

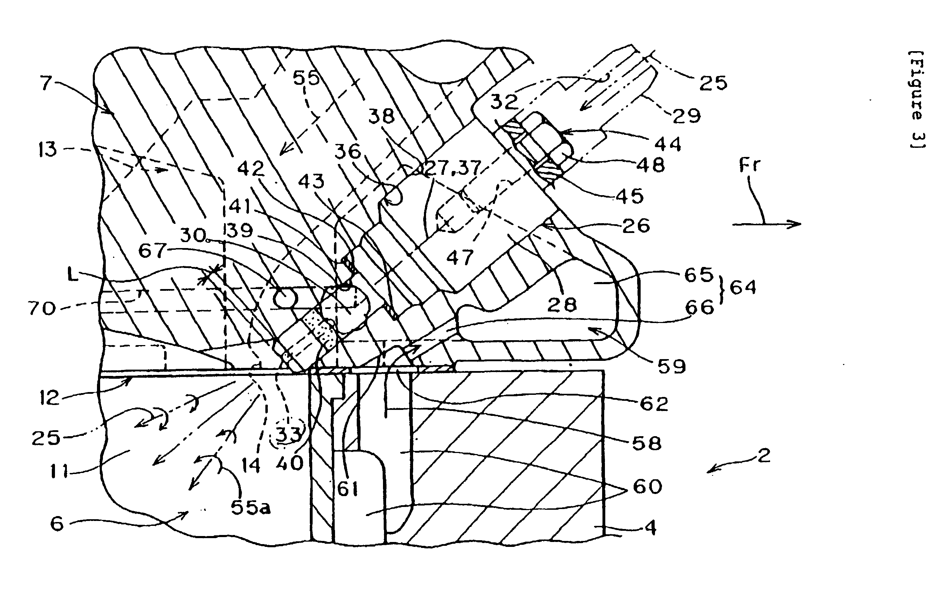

In particular, in Figure 3 when fuel 25 is injected from fuel injection nozzle 33 of said fuel injection valve 26, a negative pressure develops around the injected fuel 25 so that the surrounding air 55a readily intermingles with said injected fuel 25 due to this negative pressure, which promotes the atomization of said fuel 25.

Also, the projecting end of fuel injection part 30 of said fuel injection valve 26 projects toward the interior of combustion chamber 11 from said cylinder head 7 by a slight projection dimension L. Consequently, the projecting end of said fuel injection part 30 is kept - to some extent - at a high temperature, thereby preventing the build-up of carbon deposits on the projecting end of said fuel injection part 30 and ensuring the smooth injection of fuel 25 by said fuel injection valve 26.

In all the figures, since said cylinder 2 is heated to a high temperature by said combustion, a cooling device 59 is provided to cool this cylinder 2 with cooling water 58 which is supplied by pressurizing it with a cooling water pump 57.

Said cooling device 59 has a first cooling water jacket 60 formed in cylinder main body 4. Cooling water 58 that has been pressurized by said cooling water pump 57 is first supplied to this first cooling water jacket 60.

An annular groove 61 is formed in a circle on said central axis 3 at the bottom end surface of said cylinder head 7 facing opposite the top end surface of said cylinder main body 4, and said first cooling water jacket 60 is connected with said annular groove 61 via through-holes 62 formed at equal intervals around the periphery of the abovementioned gasket 12.

A second cooling water jacket 64 -(which is the "cooling jacket" in claim 1) - is formed in said cylinder head 7 near the underside of said fuel injection valve 26. This second cooling water jacket 64 is configured from a jacket main 65 body which has a large capacity and is provided near the underside of valve main body part 28 of said fuel injection valve 26, and a cooling water passage 66 which connects the jacket main body 65 provided near the underside of said fuel injection part 30 with said annular groove 61.

The cooling water passage 66 of said second cooling water jacket 64 extends in a straight line substantially or even exactly parallel with the central axis 27 of fuel injection part 30 of said fuel injection valve 26; said cooling water passage 66 has a circular cross-section, and this cooling water passage 66 is formed by a mechanical drilling process.

In Figure 3, the first cooling water jacket 60 formed in cylinder main body 4 and the second cooling water jacket 64 formed in said cylinder head 7 are connected via a through-hole 62 formed in said annular groove 61 and said gasket 12.

In this case, as mentioned above, the shape of cooling water passage 66 of second cooling water jacket 64 formed in cylinder head 7 can be made by a mechanical process, and thus the position in which it is formed and the dimensions with which it is formed can be made very precise.

Accordingly, although said through-hole 62 is made larger to some extent to accommodate deviations in the shape of second cooling water jacket 64 of said cylinder head 7, this extent can be made small, and thus substantial reductions in the width dimension of said gasket 12 can accordingly be prevented, whereby a good seal can be maintained.

A third cooling water jacket 67 (which is the "other cooling jacket" in the claims) is formed in said cylinder head 7 between said intake passage 13 and fuel injection valve 26. This third cooling water jacket 67 extends more or less parallel with the abovementioned crankshaft - i.e., it extends horizontally from left to right - and it has a circular cross-section. Said third cooling water jacket 67 is also formed by a mechanical drilling process. The end of this third cooling water jacket 67 is closed off with a plug 67a to prevent the cooling water inside from leaking out.

Also, a fourth cooling water jacket 68 is formed in said cylinder head 7 near the upper side of the abovementioned exhaust passage 16. A first connecting hole 70, which interconnects said second cooling water jacket 64, third cooling water jacket 67 and fourth cooling water jacket 68, and a second connecting hole 71, which connects said annular groove 61 with said fourth cooling water jacket 68, are formed in said cylinder head 7. The end of said first connecting hole 70 is closed off with a plug 70a to prevent the cooling water inside from leaking out.

The cooling water 58 supplied from said cooling water pump 57 is supplied in turn to the abovementioned first cooling water jacket 60, through-hole 62, annular groove 61, second cooling water jacket 64, first connecting hole 70, third cooling water jacket 67 and fourth cooling water jacket 68, and is also supplied in turn to said first cooling water jacket 60, through-hole 62, annular groove 61, second connecting hole 71 and fourth cooling water jacket 68, whereby each part of said cylinder 2 is cooled by cooling water 58. Also, the cooling water 58 that has reached said fourth cooling water jacket 68 is discharged to the outside and returned to said cooling water pump 57.

In the above case, when the fuel injection part 30 of fuel injection valve 26 is heated by the heat of combustion in combustion chamber 11, the heat conferred to said fuel injection part 30 is conducted through said sealing material 43 to said cylinder head 7, where it is cooled by said cooling water 58.

With the above configuration, said fuel injection valve 26 is sandwiched in the up/down direction by said intake passage 13 and second cooling water jacket 64-that is, the side of said fuel injection valve 26 toward intake passage 13 is cooled by air 55 passing through intake passage 13, while the side of said fuel injection valve 26 toward second cooling water jacket 64 is cooled by cooling water 58 passing through second cooling water jacket 64.

Accordingly, when the fuel 25 injected into cylinder hole 6 by said fuel injection valve 26 is combusted, said fuel injection valve 26 - which is heated by this heat - is cooled uniformly in all parts, and is also cooled more thoroughly due to the provision of said second cooling water jacket 64, thereby ensuring the smooth operation of fuel injection valve 26.

Also, said fuel injection valve 26 is shaped in the form of a rod with its central axis 27 extending in a straight line, and cooling water passage 66 - which forms at least one part of said second cooling water jacket 64 - is formed extending in a straight line more or less parallel with central axis 27 of this fuel injection valve 26, and this cooling water passage 66 is positioned near said fuel injection part 30 which is liable to be heated to a higher temperature.

Consequently, fuel injection part 30 of said fuel injection valve 26 is cooled more effectively by the cooling water 58 passing through cooling water passage 66 of said second cooling water jacket 64.

Moreover, since cooling water passage 66 of said second cooling water jacket 64 extends in a straight line and is made with a circular cross-section, said cooling water passage 66 can be made by a mechanical process such as drilling - i.e., the shape of said second cooling water jacket 64 can be made easily.

Also, as mentioned above, since third cooling water jacket 67 is formed in said cylinder head 7 between said intake passage 13 and fuel injection valve 26, said fuel injection valve 26 is not only sandwiched in the up/down direction by said intake passage 13 and third cooling water jacket 67 as mentioned above, but is also sandwiched by said second and third cooling water jackets 64 and 67, and is thus cooled by the cooling water 58 passing through each of these.

Moreover, the heating of air 55 passing through said intake passage 13 to a high temperature is more reliably suppressed by the cooling water 58 passing through the third cooling water jacket 67 mentioned above, thereby improving the charging efficiency.

Note that said cylinder head 7 is an aluminum casting made using a sand core, and is provided with a sand extraction hole 73 connecting said second cooling water jacket 64 with the outside - after casting, the sand of said core is removed through this sand extraction hole 73. Said sand extraction hole 73 is then closed off with a plug 74.

In conclusion, the fuel injection valve is sandwiched in the up/down direction by said intake passage and cooling water jacket - that is, the side of said fuel injection valve nearer the intake passage is cooled by the air passing through this intake passage, whereas the side of said fuel injection valve nearer the cooling water jacket is cooled by cooling water passing through this cooling water jacket.

Accordingly, when the fuel injected into the cylinder hole by said fuel injection valve is combusted, said fuel injection valve - which is heated by the heat thereof - is uniformly cooled in all parts, and is also cooled more thoroughly due to the provision of said cooling water jacket, thereby ensuring the fuel injection valve operates smoothly.

By shaping said fuel injection valve like a rod with its central axis extending in a straight line, and forming said cooling water jacket so as to extend in a straight line more or less parallel with the central axis of this fuel injection valve.

The fuel injection valve is cooled more effectively by the cooling water passing through said cooling water jacket.

Moreover, said cooling water jacket extends in a straight line and is formed with a circular lateral cross-section, and so said cooling jacket can be formed by a mechanical process such as drilling - i.e., said cooling water jacket can be formed easily.

Incidentally, the cylinder may have a gasket interspersed between the cylinder head and the top end of said cylinder main body, with the first cooling jacket formed in said cylinder main body and said second cooling water jacket formed in said cylinder head being connected via a through-hole formed in said gasket.

In this case, since the cooling water jacket formed in the cylinder head can be formed by a mechanical process, the position in which it is formed and the dimensions with which it is formed can be made very precise.

Accordingly, although said through-hole is made larger to some extent to accommodate deviations in the shape of the cooling water jacket of said cylinder head, this extent can be made small, and thus substantial reductions in the width dimension of said gasket can accordingly be prevented, whereby it can be made to keep a good seal.

By forming another cooling water jacket in said cylinder head between said intake passage and fuel injection valve.

The fuel injection valve is not only sandwiched in the up/down direction by said intake passage and the other cooling water jacket as mentioned above, but is also sandwiched by both said cooling water jackets, and is thus cooled by the cooling water passing through each of these.

Accordingly, said fuel injection valve is cooled even more fully in all parts.

## Claims

1. Cooling structure for a fuel injection valve (26) of an internal combustion engine, said engine comprises:
a cylinder main body (4) having a cylinder hole (6),
a cylinder head (7), attached to the cylinder main body (4), to close off a top end of said cylinder hole (6), and
a fuel injection valve (26) for injecting fuel into said cylinder hole (6), wherein said cooling structure comprises a cooling jacket (64) formed in the cylinder head (7) in the vicinity of said fuel injection valve (26) by casting and arranged such as to cool said injection valve (26),
**characterized in that** said cast cooling jacket (64) comprises a portion (66) extending in a straight line substantially or even exactly parallel to a central axis (27) of an injection part (30) of said fuel injection valve (26), wherein said portion (66) has a circular cross-section.

2. Cooling structure according to claim 1, **characterized in that** an intake passage (13,13a,13b) leading to the cylinder hole (6) is formed in the cylinder head at one side of the fuel injection valve (26) and the cooling jacket (64) is provided on the opposite side of said fuel injection valve (26).

3. Cooling structure according to claim 1 or 2, **characterized by** another cooling jacket (67) formed in the cylinder head (7) between the injection valve (26) and the intake passage (13,13a,13b).

4. Cooling structure according to one of the claims 1 to 3,
**characterized by** a cooling jacket (60) formed in the cylinder main body (4), wherein said cooling jacket (60) is connected with the cooling jacket (64) in said cylinder head (7).

5. Cooling structure according to one of the claims 3 or 4,
**characterized in that** the one cooling jacket (64) and the other cooling jacket (67) in the cylinder head (7) are fluidly connected with each other.

6. Cooling structure according to claim 4 or 5, **characterized by** a gasket (12) is provided between the cylinder head (7) and the cylinder main body (4), wherein said gasket (12) comprises a through hole (62) for allowing coolant fluid to pass therethrough.

7. Cooling structure according to one of the claims 1 to 6,
**characterized in that** said cooling jacket (64) is arranged beneath the fuel injection valve (26), when the engine is received vertically along the central axis of the cylinder hole (6).

8. Cooling structure according to one of the claims 1 to 7, **characterized in that** the cylinder head (7) and the cylinder main body (4) are connected by head bolts, which are arranged in such a manner that the fuel injection valve (26) crosses a plane defined by the axes of two head bolts above a sealing portion of the cylinder head (7), said sealing portion being arranged between said two axes.

9. Internal combustion engine comprising:
a cylinder main body (4) having a cylinder hole (6),
a cylinder head (7) attached to the cylinder main body (4) to close off the top end of the cylinder hole (6),
a fuel injection valve (26) for injecting fuel into the upper part inside the cylinder hole (6), and
a cooling structure according to one of claims 1 to 8.

## Patentansprüche

1. Kühlungsstruktur für ein Kraftstoffeinspritzventil (26) einer Brennkraftmaschine,
wobei die Brennkraftmaschine aufweist:
einen Zylinderhauptkörper (4), der eine Zylinderbohrung (6) hat,
einen Zylinderkopf (7), verbunden mit dem Zylinderhauptkörper (4), um ein oberes Ende der Zylinderbohrung (6) zu verschließen, und
ein Kraftstoffeinspritzventil (26) zum Einspritzen von Kraftstoff in die Zylinderbohrung (6),
wobei die Kühlungsstruktur einen Kühlmantel (64) aufweist, gebildet in dem Zylinderkopf (7) in der Nähe des Kraftstoffeinspritzventiles (26) durch Gießen und derart angeordnet, um das Einspritzventil (26) zu kühlen,
**dadurch gekennzeichnet, dass** der gegossener Kühlmantel (64) einen Abschnitt (66) aufweist, der sich im Wesentlichen in einer geraden Linie oder sogar genau parallel zu einer zentralen Achse /27) des Einspritzteiles (30) von dem Kraftstoffeinspritzventil (26) erstreckt, wobei der Abschnitt (66) einen kreisförmigen Querschnitt hat.

2. Kühlungsstruktur nach Anspruch 1, **dadurch gekennzeichnet, dass** ein Einlaßkanal (13, 13a, 13b), der zu der Zylinderbohrung (6) führt, in dem Zylinderkopf auf einer Seite des Kraftstoffeinspritzventiles (26) gebildet ist und der Kühlmantel (64) auf der gegenüberliegenden Seite des Kraftstoffeinspritzventiles (26) vorgesehen ist.

3. Kühlungsstruktur nach Anspruch 1 oder 2, **gekennzeichnet durch** einen weiteren Kühlmantel (67), gebildet in dem Zylinderkopf (7) zwischen dem Einspritzventil (26) und dem Einlaßkanal (13, 13a, 13b).

4. Kühlungsstruktur nach einem der Ansprüche 1 bis 3, **gekennzeichnet durch** einen Kühlmantel (60), gebildet in dem Zylinderhauptkörper (4), wobei der Kühlmantel (60) mit dem Kühlmantel (64) in dem Zylinderkopf (7) verbunden ist.

5. Kühlungsstruktur nach einem der Ansprüche 3 oder 4, **dadurch gekennzeichnet, dass** der eine Kühlmantel (64) und der andere Kühlmantel (67) in dem Zylinderkopf (7) miteinander fluidverbunden sind.

6. Kühlungsstruktur nach einem der Ansprüche 4 oder 5, **gekennzeichnet durch** eine Dichtung (12), die zwischen dem Zylinderkopf (7) und dem Zylinderhauptkörper (4) vorgesehen ist, um dem Kühlfluid zu gestatten, **durch** diese hindurch zu fließen.

7. Kühlungsstruktur nach einem der Ansprüche 1 bis 6, **dadurch gekennzeichnet, dass** der Kühlmantel (64) unterhalb des Kraftstoffeinspritzventiles (26) angeordnet ist, wenn der Motor vertikal entlang der Mittelachse der Zylinderbohrung (6) aufgenommen ist.

8. Kühlungsstruktur nach einem der Ansprüche 1 bis 7, **dadurch gekennzeichnet, dass** der Zylinderkopf (7) und der Zylinderhauptkörper (4) durch Kopfschrauben verbunden sind, die in einer Weise angeordnet sind, dass das Kraftstoffeinspritzventil (26) eine Ebene kreuzt, die durch die Achsen der zwei Kopfschrauben oberhalb eines Dichtungsabschnittes des Zylinderkopfes (7) gebildet wird, wobei der Dichtungsabschnitt zwischen den zwei Achsen angeordnet ist.

9. Brennkraftmaschine mit:
einem Zylinderhauptkörper (4), der eine Zylinderbohrung (6) hat,
einem Zylinderkopf (7), mit dem Zylinderhauptkörper (4) verbunden, um das obere Ende der Zylinderbohrung (6) abzuschließen,
einem Kraftstoffeinspritzventil (26) zum Kraftstoffeinspritzen in den oberen Teil innerhalb der Zylinderbohrung (6), und
einer Kühlungsstruktur nach einem der Ansprüche 1 bis 8.

## Revendications

1. Structure de refroidissement pour une soupape d'injection de carburant (26) d'un moteur à combustion interne, ledit moteur comprenant :
un corps principal de cylindre (4) ayant un trou de cylindre (6), une tête de cylindre (7), fixée au corps principal de cylindre (4), pour fermer une extrémité fermée dudit trou de cylindre (6), et
une soupape d'injection de carburant (26) pour injecter le carburant dans ledit trou de cylindre (6), dans laquelle ladite structure de refroidissement comprend une chemise de refroidissement (64) formée dans la tête de cylindre (7) à proximité de ladite soupape d'injection de carburant (26) par scellement et agencée de manière à refroidir ladite soupape d'injection (26), **caractérisée en ce que** ladite chemise de refroidissement scellée (64) comprend une partie (66) s'étendant en une ligne sensiblement droite ou même exactement parallèle à un axe central (27) d'une partie d'injection (30) de ladite soupape d'injection de carburant (26), dans laquelle ladite partie (66) a une section transversale circulaire.

2. Structure de refroidissement selon la revendication 1, **caractérisée en ce qu'**un passage d'admission (13, 13a, 13b) conduisant au trou de cylindre (6) est formé dans la tête de cylindre d'un côté de la soupape d'injection de carburant (26) et la chemise de refroidissement (64) est disposée sur le côté opposé de ladite soupape d'injection de carburant (26).

3. Structure de refroidissement selon la revendication 1 ou 2, **caractérisée par** une autre chemise de refroidissement (67) formée dans la tête de cylindre (7) entre la soupape d'injection (26) et le passage d'admission (13, 13a, 13b).

4. Structure de refroidissement selon une des revendications 1 à 3, **caractérisée par** une chemise de refroidissement (60) formée dans le corps principal de cylindre (4) dans laquelle ladite chemise de refroidissement (60) est connectée à la chemise de refroidissement (64) dans ladite tête de cylindre (7).

5. Structure de refroidissement selon une des revendications 3 ou 4, **caractérisée en ce que** la chemise de refroidissement (64) et l'autre chemise de refroidissement (67) dans la tête de cylindre (7) sont en connexion liquide l'une avec l'autre.

6. Structure de refroidissement selon la revendication 4 ou 5, **caractérisée en ce qu'**un joint (12) est disposé entre la tête de cylindre (7) et le corps principal de cylindre (4), dans laquelle ledit joint (12) comprend un trou de passage (62) pour permettre au liquide réfrigérant de passer au travers.

7. Structure de refroidissement selon une des revendications 1 à 6, **caractérisée en ce que** ladite chemise de refroidissement (64) est agencée sous la soupape d'injection de carburant (26), lorsque le moteur est reçu verticalement le long de l'axe central du trou de cylindre (6).

8. Structure de refroidissement selon une des revendications 1 à 7, **caractérisée en ce que** la tête de cylindre (7) et le corps principal de cylindre (4) sont connectés par des boulons à tête, qui sont agencés de telle manière que la soupape d'injection de carburant (26) traverse un plan défini par les axes de deux boulons à tête au-dessus d'une partie d'étanchéité de la tête de cylindre (7), ladite partie d'étanchéité étant agencée entre lesdits deux axes.

9. Moteur à combustion interne comprenant :
un corps principal de cylindre (4) ayant un trou de cylindre (6),
une tête de cylindre (7) fixée au corps principal de cylindre (4) pour fermer une extrémité fermée dudit trou de cylindre (6),
une soupape d'injection de carburant (26) pour injecter le carburant dans ledit trou de cylindre (6), et
une structure de refroidissement selon une des revendications 1 à 8.
